# EUROPEAN PATENT APPLICATION

(11) **EP 2 405 669 A1**
(43) Date of publication of application: **11.01.2012**
(21) Application number: 11742155.2
(22) Date of filing: 03.02.2011
(51) Int. Cl.: H04N 13/04, G02B 27/22, G09G 5/36

(54) **DISPLAY DEVICE, SHUTTER DEVICE, SHUTTER CONTROL CIRCUIT, SHUTTER CONTROL METHOD, AND DISPLAY SYSTEM**

(30) Priority: 10.02.2010 JP 2010027698
(71) Applicant: Sony Corporation, Tokyo 108-0075 (JP)
(72) Inventor: NAKAJIMA, Yasuhisa, Tokyo 108-0075 (JP)
(74) Representative: Berryman, Robert Jan
(86) International application number: PCT/JP2011/052226
(87) International publication number: WO 2011/099411

(57) **Abstract**

A display system using a shutter device which is capable of reducing power consumed by a transmission section transmitting a shutter control signal, and achieving increased degree of freedom in setting of open/close timings of shutters is obtained. The display system includes a display section 12 alternately displaying a left-eye image and a right-eye image in a time-divisional manner, a shutter control code generation section (a shutter control section 15) generating a shutter control code (a control code C) which allows a left-eye shutter 6L and a right-eye shutter 6R to switch between opened state and closed state, in synchronization with switching between the left-eye image and the right-eye image. The shutter control code includes open operation timing information (a command bit CB) instructing a start point of open operation of the left-eye shutter 6L or the right-eye shutter 6R and open time information (a duty flag DF and a duty bit DB, or a duty flag DF) indicating an open time of the left-eye shutter or the right-eye shutter.

## Description

### TECHNICAL FIELD

The present invention relates to a display system using a shutter device, and a display device, a shutter device, a shutter control circuit, and a method of controlling shutters suitably used in such a system.

### BACKGROUND ART

In recent years, display systems capable of achieving a stereoscopic display have attracted attention. One of such display systems is a display system using shutter eyeglasses. In the display system, a left-eye image and a right-eye image which have a parallax therebetween are alternately displayed on a display device in a time-divisional manner, and a left-eye shutter and a right-eye shutter in the shutter eyeglasses are switched to open/close in synchronization with the switching between the images. When the switching operation is repeated, a viewer is allowed to perceive a picture configured of these images as a stereoscopic picture with a depth.

The open/close control of the left-eye shutter and the right-eye shutter in the shutter eyeglasses is typically performed based on a shutter control signal supplied from the display device. For example, in Non-Patent Literature 1, a method of controlling a shutter device has been described. In the method, a signal having a duty ratio of 50% is used as a shutter control signal, a display device displays a left-eye image and a left-eye shutter of shutter eyeglasses is opened when the level signal is at high level, and the display device displays a right-eye image and right-eye shutter of the shutter eyeglasses is opened when the level signal is at low level. In addition, in Patent Literature 1, a radio receiver has been proposed in which a coded signal is used as a shutter control signal and power consumed by a reception section of shutter eyeglasses which receives the shutter control signal is reduced, in a case where the shutter control signal is supplied through infrared rays, radio waves, or the like.

### [Citation list]

[Patent Literature]
[PTL 1] Japanese Patent Application Unexamined Publication No. H08-265863

[Non-Patent Literature]
[NPTL1] Video Electronics Standards Association, "VESA Standard Connector and Signal Standards for Stereoscopic Display Hardware", Version 1, November 5, 1997

### SUMMARY OF INVENTION

In recent years, from an ecological point of view, reduction of power consumed by electronic units has attracted attention. Generally, for transmission of a signal, a transmission section consumes larger power compared with a reception section. Therefore, in a display system using shutter eyeglasses, there is an issue that power consumed by a transmission section of a display device which transmits a shutter control signal is reduced as much as possible. However, in the method of controlling shutter eyeglasses disclosed in Non-Patent Literature 1, since a level signal having a duty ratio of 50% is transmitted, when the signal is transmitted in a state where the opened state and the closed state of the shutter correspond to light-emission and non-light-emission of infrared rays, respectively, light is continuously emitted during a half period of the signal. Therefore, the power consumed by the transmission section may be increased. In addition, as for the radio receiver disclosed in the Patent Literature 1, power consumed by the transmission section has not been cited at all.

Moreover, in a case where open/close control of a left-eye shutter and a right-eye shutter of shutter eyeglasses is performed, it is desirable that open timings or close timings of the shutters be freely set. However, in the method of controlling shutter eyeglasses disclosed in Non-Patent Literature 1, since the duty ratio of the shutter control signal is fixed to 50%, when the open timings of the shutters are set, the close timings of the shutters are uniquely determined. In other words, degree of freedom in setting of the open/close timings of the shutters is low. In addition, as for the radio receiver disclosed in the Patent Literature 1, open/close timings of shutter eyeglasses have not been cited at all.

In view of the foregoing issues, it is an object of the present invention to provide a display device, a shutter device, a shutter control circuit, a method of controlling shutters, and a display system capable of realizing increased degree of freedom in setting of open/close timings of shutters while reducing power consumed by a transmission section which transmitting a shutter control signal.

A first display device according to an embodiment of the invention includes a display section and a shutter control code generation section. The display section alternately displays a left-eye image and a right-eye image in a time-divisional manner. The shutter control code generation section generates a shutter control code which allows a left-eye shutter and a right-eye shutter to switch between opened state and closed state, in synchronization with switching between the left-eye image and the right-eye image. The shutter control code includes open operation timing information instructing a start point of the open operation of the left-eye shutter or the right-eye shutter, and open time information indicating an open time of the left-eye shutter or the right-eye shutter.

A second display device according to an embodiment of the invention includes a display section and a shutter control code generation section. The display section alternately displays a first image and a second image in a time-divisional manner. The shutter control code generation section generates a shutter control code which allows one or more first shutters and one or more second shutters to switch between opened state and closed state, in synchronization with switching between the first image and the second image. The shutter control code includes open operation timing information instructing a start point of open operation of the first shutters or the second shutters, and open time information indicating an open time of the first shutters or the second shutters.

A shutter device according to an embodiment of the invention includes reception means, and a left-eye shutter and a right-eye shutter. The reception means receives a shutter control code. The left-eye shutter and the right-eye shutter each switching between opened state and closed state, based on the shutter control code and in synchronization with switching between a left-eye image and a right-eye image which are alternately displayed in a time-divisional manner. The shutter control code includes open operation timing information instructing a start point of open operation of the left-eye shutter or the right-eye shutter and open time information indicating an open time of the left-eye shutter or the right-eye shutter.

A shutter control circuit according to an embodiment of the invention includes a shutter control code generation section and transmission means. The shutter control code generation section generates a shutter control code which allows a left-eye shutter and a right-eye shutter to switch between opened state and closed state, in synchronization with switching between a left-eye image and a right-eye image which are alternately displayed in a time-divisional manner. The transmission means transmits the shutter control code to the left-eye shutter and the right-eye shutter. The shutter control code includes open operation timing information instructing a start point of open operation of the left-eye shutter or the right-eye shutter and open time information indicating an open time of the left-eye shutter or the right-eye shutter.

A method of controlling shutters according to an embodiment of the invention includes, in a display device, displaying a left-eye image and a right-eye image alternately, and generating a shutter control code which includes open operation timing information instructing a start point of open operation of a left-eye shutter or a right-eye shutter and open time information indicating an open time of the left-eye shutter or the right-eye shutter, and transmitting the shutter control code to a shutter device, in synchronization with display switching between the left-eye image and the right-eye image, and in the shutter device, receiving the shutter control code, and allowing each of the left-eye shutter and the right-eye shutter to start open operation, based on the received open operation timing information, and allowing each of the left-eye shutter and the right-eye shutter to perform close operation after the elapse of a time based on the received open time information.

A display system according to an embodiment of the invention includes the first display device of the above-described embodiment of the invention.

In the first display device, the shutter device, the shutter control circuit, and the method of controlling shutters according to the embodiment of the invention, the shutter control code including the open operation timing information and the open time information of the left-eye shutter and the right-eye shutter is generated in the display device, and then the shutter control code is supplied to the shutter device. In the shutter device, open/close timings of each shutter are determined based on the shutter control code, and open/close operation of each shutter is performed. With use of such a shutter control code, both of open and close operations may be instructed by one shutter control code.

In the second display device according to the embodiment of the invention, the display device generates the shutter control code including the open operation timing information and the open time information of the first shutters and the second shutters, and supplies the shutter control code to the shutter device. With use of such a shutter control code, both of open and close operations may be instructed by one shutter control code.

In the first display device according to the embodiment of the invention, for example, the open time information includes an open time information flag indicating whether an open time of the left-eye shutter or the right-eye shutter is instructed with use of an open time value indicating length of the time, and the open time value is desirably arranged subsequent to the open time information flag only when the open time information flag is active logic. In this case, for example, the open time information may use an open/close duty ratio representing a ratio of the open time of the left-eye shutter or the right-eye shutter to a frame period in which a set of the left-eye image and the right-eye image are displayed. As the open time value, a value representing a relative value to a reference value of the open/close duty ratio may be used, for example. The reference value of the open/close duty ratio may be set to, for example, 50%.

In the shutter device according to the embodiment of the invention, for example, the open time information includes an open time information flag indicating whether an open time of the left-eye shutter or the right-eye shutter is instructed with use of an open time value indicating length of the time, and the open time value is desirably arranged subsequent to the open time information flag only when the open time information flag is active logic. In this case, for example, the left-eye shutter and the right-eye shutter desirably operate based on the open time value arranged subsequent to the open time information flag when the open time information flag is active logic, and desirably operate based on the open time value which is lastly supplied (namely, immediately before), when the open time information flag is inactive logic.

Moreover, for example, when the open time value is invalid (for example, when all bits in the open time value are inactive logic), the left-eye shutter and the right-eye shutter may operate based on the open time value which is lastly supplied.

In the first and second display devices, the shutter device, the shutter control circuit, the method of controlling shutters, and the display system according to the embodiment of the invention, the shutter control code including the open operation timing information and the open time information is used for instructing open/close operation of the shutters, and therefore increased degree of freedom in setting of the open/close timings of the shutters is achievable while power consumed by the transmission section transmitting the shutter control code is reduced.

### BRIEF DESCRIPTION OF DRAWINGS

[FIG. 1] FIG. 1 is a block diagram illustrating a configuration example of a display system according to a first embodiment of the invention.
[FIG. 2] FIG. 2 is a block diagram illustrating a configuration example of a display device illustrated in FIG. 1.
[FIG. 3] FIG. 3 is a block diagram illustrating a configuration example of a display drive section and a display section illustrated in FIG. 1.
[FIG. 4] FIG. 4 is a block diagram illustrating a configuration example of a pixel illustrated in FIG. 3.
[FIG. 5] FIG. 5 is a block diagram illustrating a configuration example of shutter eyeglasses illustrated in FIG. 1.
[FIG. 6] FIG. 6 shows tables illustrating a structure example of a control code relating to the display system illustrated in FIG. 1.
[FIG. 7] FIG. 7 shows schematic diagrams illustrating an operation example of the display system illustrated in FIG. 1.
[FIG. 8] FIG. 8 is a timing waveform chart illustrating an operation example of the display system illustrated in FIG. 1.
[FIG. 9] FIG. 9 is a timing waveform chart illustrating another operation example of the display system illustrated in FIG. 1.
[FIG. 10] FIG. 10 is a flowchart illustrating an operation example of the display device illustrated in FIG. 1.
[FIG. 11] FIG. 11 is a timing waveform chart illustrating an operation example of a display system according to a comparative example.
[FIG. 12] FIG. 12 is a timing waveform chart illustrating an operation example of a display system according to another comparative example.
[FIG. 13] FIG. 13 is a timing waveform chart illustrating an operation example of a display system according to still another comparative example.
[FIG. 14] FIG. 14 shows tables illustrating a structure example of a control code relating to the display system illustrated in FIG. 13.
[FIG. 15] FIG. 15 is a table illustrating a comparison between the display system illustrated in FIG. 1 and those in the comparative examples.
[FIG. 16] FIG. 16 is a block diagram illustrating a configuration example of a display system according to a second embodiment of the invention.
[FIG. 17] FIG. 17 shows tables illustrating a structure example of a control code relating to the display system illustrated in FIG. 16.
[FIG. 18] FIG. 18 shows schematic diagrams illustrating an operation example of the display system illustrated in FIG. 16.
[FIG. 19] FIG. 19 is a timing waveform chart illustrating an operation example of the display system illustrated in FIG. 16.

### DESCRIPTION OF EMBODIMENTS

Hereinafter, preferred embodiments of the present invention will be described with referring to the accompanying drawings. Note that descriptions will be given in the following order.
1. First embodiment
2. Second embodiment

### [1. First Embodiment]

### [Configuration Example]

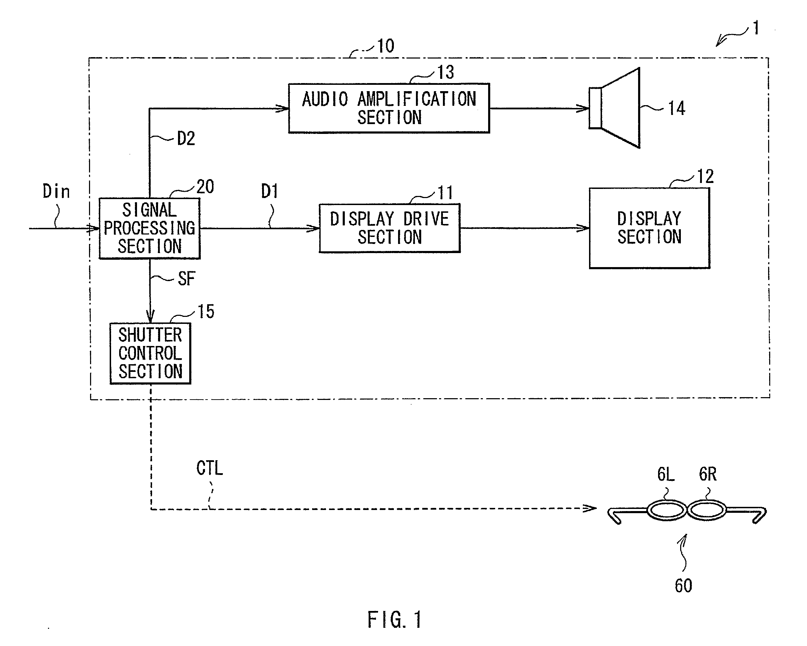

FIG. 1 illustrates a configuration example of a display system according to a first embodiment of the invention. The display system 1 is a stereoscopic display system achieving a stereoscopic display by alternately displaying a left-eye image and a right-eye image which have a parallax therebetween, in a time-divisional manner, and allowing left and right shutters of shutter eyeglasses to switch between opened state and closed state, in synchronization with switching between the left-eye image and the right-eye image. The display system 1 includes a display device 10 and shutter eyeglasses 60. Note that a display device, a shutter device, a shutter control circuit, a method of controlling shutters in the display system according to the embodiment of the invention are realized by the embodiment, and thus the description thereof will be given together.

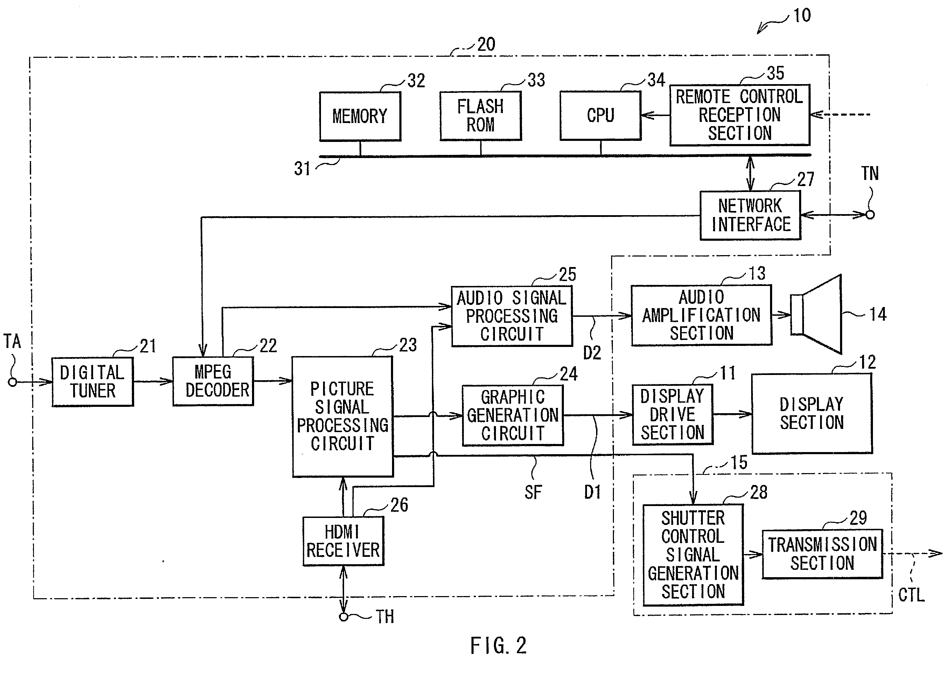

As illustrated in FIG. 2, the display device 10 includes a signal processing section 20, a display drive section 11, a display section 12, an audio amplification section 13, a speaker 14, and a shutter control section 15. Based on an input signal Din including a stereoscopic picture signal, the display device 10 displays a picture on the display section 12 and outputs an audio from the speaker 14. The stereoscopic picture signal is a picture signal obtained by alternately arranging a left-eye image and a right-eye image which have a parallax therebetween.

The signal processing section 20 generates a picture signal D1 including an image signal for left eye DL and an image signal for right eye DR, and an audio signal D2. In addition, the signal processing section 20 has a function of generating and outputting a signal for controlling the shutter control section 15. Specifically, a picture signal processing circuit 23 (described later) in the signal processing section 20 outputs a synchronization signal (a frame switching signal SF) synchronized with the image signal for left eye DL and the image signal for right eye DR to supply the synchronization signal to the shutter control section 15.

As illustrated in FIG. 2, the signal processing section 20 includes a digital tuner 21, an MPEG (Moving Picture Experts Group) decoder 22, a picture signal processing circuit 23, a graphics generation circuit 24, an audio signal processing circuit 25, an HDMI (High-Definition Multimedia Interface) receiver 26, and a network interface 27.

The digital tuner 21 selects a desired signal (stream) from a broadcast wave (corresponding to the input signal Din in FIG. 1) which is received by an antenna (not illustrated) and is supplied through an antenna terminal TA. The MPEG decoder 22 extracts a picture signal and an audio signal from the stream selected by the digital tuner 21. The picture signal processing circuit 23 has a function of performing picture signal processing such as gamma processing, YUV-RGB conversion, and frame sequential output, on the picture signal extracted by the MPEG decoder 22, and generating a frame switching signal SF. The picture signal processing circuit 23 also has a function of adjusting an output timing of the frame switching signal SF. Accordingly, the picture signal processing circuit 23 is allowed to control a generation timing of a control code C (described later) of a shutter control signal CTL, and to set an open operation timing of shutters of the shutter eyeglasses 60. The graphics generation circuit 24 generates OSD (On Screen Display) information, superimposes the OSD information on the picture supplied from the picture signal processing circuit 23 to output a resultant signal, and then supplies the output signal as the picture signal D1 to the display drive section 11. The audio signal processing circuit 25 has a function of performing audio signal processing such as surround processing on the audio signal extracted by the MPEG decoder 22 to output a resultant signal, and supplying the output signal as the audio signal D2 to the audio amplification section 13.

The display device 10 illustrated in FIG. 2 is allowed to select a plurality of signals as the input signal Din, besides the above-described broadcast wave. Specifically, as described below, the display device 10 is allowed to select, as the input signal Din, a signal from an external device such as a BD (Blu-ray Disc) recorder, an IP (Internet Protocol) broadcast signal, or the like.

The HDMI receiver 26 is a circuit receiving a signal supplied from an external device (not illustrated) through an HDMI terminal TH. The HDMI receiver 26 has a function of extracting a picture signal and an audio signal from the received signal, and supplying the picture signal and the audio signal to the picture signal processing circuit 23 and the audio signal processing circuit 25, respectively.

The network interface 27 receives an IP broadcast signal supplied through a network terminal TN connected to the Internet to supply the received signal to the MPEG decoder 22.

The signal processing section 20 includes a memory 32, a flash ROM 33, and a CPU 34 which are connected to one another through an internal bus 31. The internal bus 31 is connected to the network interface 27. Moreover, the signal processing section 20 includes a remote control reception section 35. The remote control reception section 35 receives an instruction signal from a remote controller (not illustrated) and supplies the signal to the CPU 34.

In FIG. 1, the display drive section 11 is a circuit generating a drive signal for driving the display section 12, based on the picture signal D1 supplied from the signal processing section 20. The display section 12 alternately displays a left-eye image and a right-eye image, based on the drive signal supplied from the display drive section 11.

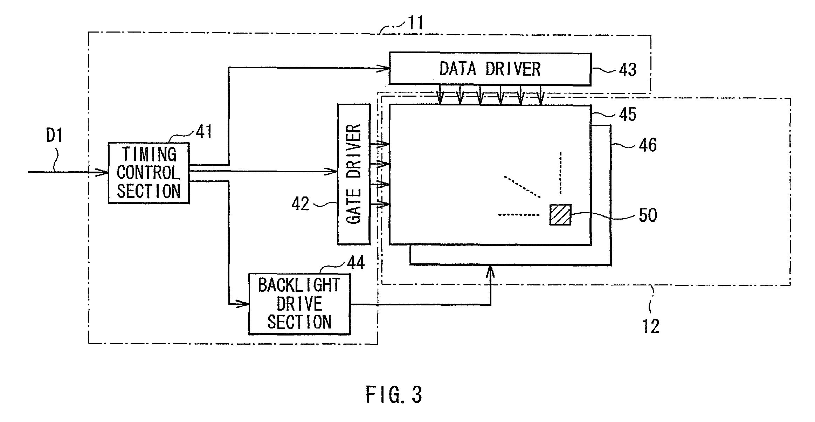

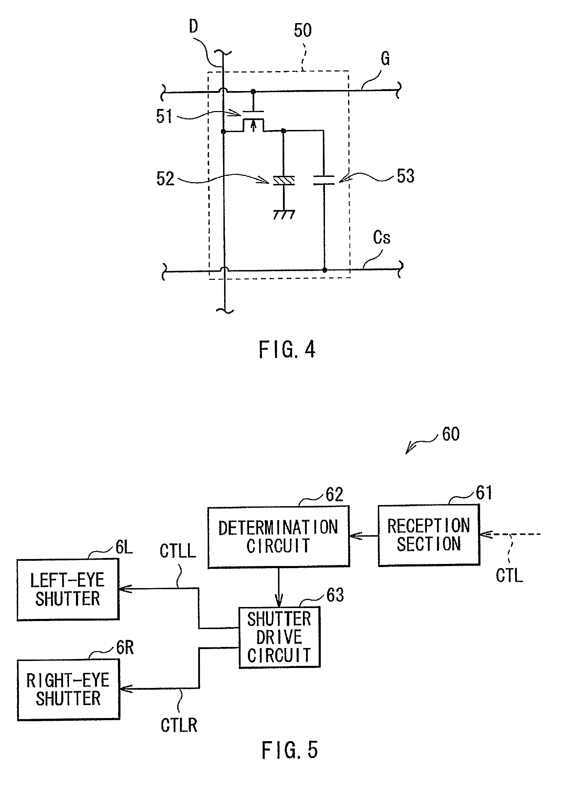

Referring to FIGs. 3 and 4, a configuration example of the display drive section 11 and the display section 12 will be described. FIG. 3 illustrates a configuration example of the display drive section 11 and the display section 12, and FIG. 4 illustrates a configuration example of a pixel 50 relating to the display section 12. As illustrated in FIG. 3, the display section 12 includes a liquid crystal display device 45 and a backlight 46. The display drive section 11 includes a timing control section 41, a gate driver 42, a data driver 43, and a backlight drive section 44.

The liquid crystal display device 45 performs a display, based on a pixel signal supplied from the data driver 43 (described later). The pixels 50 are arranged in a matrix in the liquid crystal display device 45.

As illustrated in FIG. 4, each of the pixels 50 includes a TFT (Thin Film Transistor) element 51, a liquid crystal element 52, and a retention capacitor 53. The TFT element 51 is configured of, for example, an MOS-FET (Metal Oxide Semiconductor-Field Effect Transistor), and has a gate connected to a gate line G, a source connected to a data line D, and a drain connected to one end of the liquid crystal element 52 and to one end of the retention capacitor 53. One end of the liquid crystal element 52 is connected to the drain of the TFT element 51, and the other end thereof is grounded. One end of the retention capacitor 53 is connected to the drain of the TFT element 51, and the other end thereof is connected to a retention capacitor line Cs. The gate line G is connected to the gate driver 42, and the data line D is connected to the data driver 43.

The backlight 46 is a light source for emitting light to the liquid crystal display device 45, and for example, an LED (Light Emitting Diode) and a CCFL (Cold Cathode Fluorescent Lamp) may be used as the backlight 46.

In FIG. 3, the timing control section 41 controls a driving timing of each of the gate driver 42, the data driver 43, and the backlight drive section 44, and supplies the picture signal D1 supplied from the signal processing section 20 to the data driver 43. The gate driver 42 selects the pixels 50 in the liquid crystal display device 45 on the column basis to perform line-sequential scanning, according to a timing control by the timing control section 41. The data driver 43 supplies the pixel signal based on the picture signal D1 to each of the pixels 50 in the liquid crystal display device 45. Specifically, the data driver 43 performs a D/A (digital/analog) conversion on the picture signal D1 to generate the pixel signal as an analog signal, and then supplies the pixel signal to each of the pixels 50. The backlight drive section 44 controls lighting operation of the backlight 46 according to the timing control by the timing control section 41.

With this configuration, in the display section 12, the pixel signal is supplied form the data driver 43 to the pixels 50 selected by the gate driver 42. As a result, light from the backlight 46 is modulated by the liquid crystal element 52 in each of the selected pixels 50. When the operation is performed by the line-sequential scanning with respect to a display surface of the liquid crystal display device 45, an image is displayed. The display section 12 performs the display operation on each of the picture signal for left eye DL and the picture signal for right eye DR which are alternately supplied, to display the left-eye image and the right-eye image alternately in a time-divisional manner.

In FIG. 1, the audio amplification section 13 has a function of amplifying the audio signal D2 supplied from the signal processing section 20. The speaker 14 outputs the audio signal amplified by the audio amplification section 13.

The shutter control section 15 is a circuit generating a shutter control signal CTL, based on the frame switching signal SF supplied from the signal processing section 20 to supply the shutter control signal CTL to the shutter eyeglasses 60 through radio communication using, for example, infrared rays or radio waves. The shutter control signal CTL is a coded signal for controlling open/close operation of the shutter eyeglasses 60, and is a signal synchronized with the left-eye image and the right-eye image which are displayed on the display device 10. The shutter control section 15 includes a shutter control signal generation section 28 and a transmission section 29. The shutter control signal generation section 28 has a function of generating a shutter control signal CTL for controlling the open/close operation of the shutters of the shutter eyeglasses 60 to drive the transmission section 29, based on the frame switching signal SF. The transmission section 29 transmits the shutter control signal CTL through radio communication using, for example, infrared rays or radio waves to supply the shutter control signal CTL to the shutter eyeglasses 60. The transmission section 29 may modulate the shutter control signal CTL at the time of transmitting the shutter control signal CTL. Note that in the example, although the transmission section 29 transmits the shutter control signal CTL through radio communication, the transmission section 29 may transmit the signal through cable communication.

When used by a viewer (not illustrated) of the display device 10, the shutter eyeglasses 60 allow the viewer to perceive a stereoscopic display. The shutter eyeglasses 60 include a left-eye shutter 6L and a right-eye shutter 6R. Each of the left-eye shutter 6L and the right-eye shutter 6R is configured of a light-shielding shutter such as a liquid crystal shutter. A light-shielding state (an opened state and a closed state) of each of the left-eye shutter 6L and the right-eye shutter 6R is controlled by the shutter control signal CTL supplied from the shutter control section 15.

FIG. 5 illustrates a configuration example of the shutter eyeglasses 60. The shutter eyeglasses 60 include a reception section 61, a determination circuit 62, a shutter drive circuit 63, the left-eye shutter 6L, and the right-eye shutter 6R. The reception section 61 is a circuit receiving the shutter control signal CTL supplied through radio communication from the transmission section 29 in the display device 10 illustrated in FIG. 2. The determination circuit 62 has a function of decoding the control code C (described later) of the shutter control signal CTL received by the reception section 61 and determining an open/close instruction with respect to the left-eye shutter 6L and the right-eye shutter 6R. The shutter drive circuit 63 generates, based on the signal supplied from the determination circuit 62, a control signal for the left-eye shutter CTLL with respect to the left-eye shutter 6L and a control signal for the right-eye shutter CTLR with respect to the right-eye shutter 6R to supply the control signals CTLL and CTLR to the left-eye shutter 6L and the right-eye shutter 6R, respectively. The left-eye shutter 6L performs open/close operation of the shutter, based on the control signal for the left-eye shutter CTLL supplied from the shutter drive circuit 63. The right-eye shutter 6R performs open/close operation of the shutter, based on the control signal for the right-eye shutter CTLR supplied from the shutter drive circuit 63.

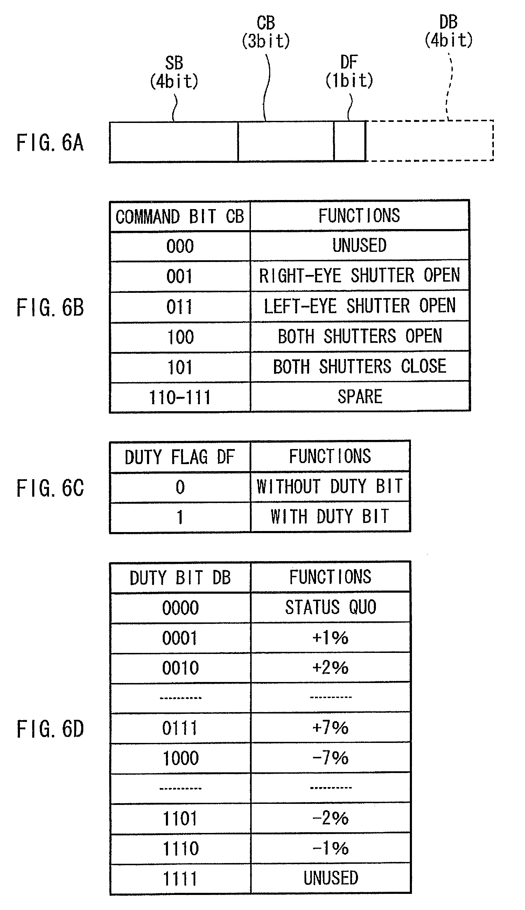

FIG. 6 illustrates a structure example of the control code C of the shutter control signal CTL. In FIG. 6, (A) illustrates a general structure of the control code C, (B) illustrates functions of a command bit CB relating to the control code C, (C) illustrates functions of a duty flag DF relating to the control code C, and (D) illustrates functions of a duty bit DB relating to the control code C. The shutter control signal generation section 28 generates the control code C for each image of the left-eye image and the right-eye image, based on the frame switching signal SF supplied from the signal processing section 20.

As illustrated in (A) of FIG. 6, in this example, the control code C includes a start bit SB of 4 bits, the command bit CB of 3 bits, and the duty flag DF of 1 bit. The duty bit DB of 4 bits is added only in a case where an open/close duty ratio of the left-eye shutter 6L and the right-eye shutter 6R is set as described later. In other words, the control code C is variable in length.

The start bit SB functions as a preamble of the control code C of the shutter control signal CTL, and is configured of a predetermined bit pattern. The determination circuit 62 in the shutter eyeglasses 60 detects the bit pattern to perform detection of the control code C.

As illustrated in (B) of FIG. 6, the command bit CB is intended to instruct each of the left-eye shutter 6L and the right-eye shutter 6R of the shutter eyeglasses 60 to perform open/close operation. Specifically, the command bit CB may instruct, for example, open operation of the left-eye shutter 6L (command bit CB: "011 "), open operation of the right-eye shutter 6R (command bit CB: "001"), and close operation of both shutters (command bit CB:"101"). These instructions are used, for example, in a case where the input signal Din is a stereoscopic picture signal. In addition, the command bit CB may also instruct open operation of both of the left-eye shutter 6L and the right-eye shutter 6R (command bit CB: "100"). This instruction is used, for example, in a case where the input signal Din is not a stereoscopic picture signal but a normal picture signal. Note that the command bit CB does not include a code for instructing close operation of the left-eye shutter 6L and close operation of the right-eye shutter 6R individually. The timings of the close operation are instructed by the duty bit DB (open/close duty ratio) which will be described later.

As illustrated in (C) of FIG. 6, the duty flag DF is a flag indicating whether the value of the open/close duty ratio indicating open time of the left-eye shutter 6L and of the right-eye shutter 6R is instructed. When the value of the open/close duty ratio is instructed, the duty flag DF is set to "1" (active logic), and the duty bit DB ((D) of FIG. 6) instructing the value of the open/close duty ratio is added subsequent to the flag. On the other hand, when the value of the open/close duty ratio is not instructed, the duty flag DF is set to "0" (inactive logic). In this case, the shutter eyeglasses 60 operate to maintain the open/close duty ratio as it is, which is lastly instructed by the previous control code C. In other words, in this case, the display device 10 instructs the shutter eyeglasses 60 not to reset the open/close duty ratio.

As illustrated in (D) of FIG. 6, the duty bit DB is intended to instruct the value of the open/close duty ratio, and is added subsequent to the duty flag DF in a case where the duty flag DF is 1 (active logic) as described above. The open/close duty ratio indicates a ratio of the open time of the left-eye shutter 6L or the right-eye shutter 6R to a frame period that is a time period in which a set of the left-eye image and the right-eye image is displayed. In this example, the open/close duty ratio is intended to instruct a relative value in a range of ± 7% to a reference value of the open/close duty ratio. Note that, for example, when the power of the shutter eyeglasses 60 or the display system 1 is turned on, the open/close duty ratio is set to the reference value. The reference value of the open/close duty ratio is set to 50% in this example. Note that the reference value is not limited to 50%, and may be 40%, 60%, or other values. In addition, when the duty bit DB is "0000", that is, when all bits included in the duty bit DB are inactive logic, the shutter eyeglasses 60 operate to maintain the open/close duty ratio as it is, which is lastly instructed by the previous control code C, without changing the open/close duty ratio.

Incidentally, the above-described value of ± 7% is determined for convenience of the description, and is not limited thereto. The value may be set to any value in a range not exceeding ± 50% (0% to 100% in the absolute value of the open/close duty ratio). Moreover, in this example, although the duty bit DB is set to 4 bits, this is not limitative. For example, when the open/close duty ratio is set in a wide range, or when the open/close duty ratio is set to high definition, the duty bit DB may be more increased. In contrast, when the open/close duty ratio can be set in a narrow range, or when the open/close duty ratio can be set to low definition, the duty bit DB may be decreased. In addition, in this example, although the open/close duty ratio is instructed as the relative value to the reference value, this is not limitative and may be instructed as the absolute value of the open/close duty ratio.

With the above-described configuration, the left-eye shutter 6L and the right-eye shutter 6R of the shutter eyeglasses 60 each perform open/close operation of the shutter, based on the shutter control signal CTL transmitted by the shutter control section 15 of the display device 10 and in synchronization with the left-eye image and the right-eye image which are displayed on the display device 10 in a time-divisional manner. To be more specific, the shutter eyeglasses 60 perform open operation of the shutters, based on the open operation timing instructed by the control code C of the shutter control signal CTL, and perform close operation of the shutters after the elapse of a time corresponding to the instructed open/close duty ratio.

Herein, the display section 12 corresponds to a specific example of "a display section" in the invention. The control code C of the shutter control signal CTL corresponds to a specific example of "a shutter control code" in the invention. The shutter control signal generation section 28 corresponds to a specific example of "a shutter control code generation section" in the invention.

The command bit CB corresponds to a specific example of "open operation timing information" in the invention. The duty flag DF and the duty bit DB, or the duty flag DF corresponds to a specific example of "open time information" in the invention. The duty flag DF also corresponds to a specific example of "an open time information flag" in the invention. The duty bit DB corresponds to a specific example of "an open time value" in the invention.

### [Operations and Functions]

Subsequently, operations and functions of the display system 1 of the embodiment will be described.

### (General Operation Outline)

The signal processing section 20 generates a picture signal D1 and an audio signal D2, based on the input signal Din including a stereoscopic picture signal which is configured by alternately arranging a left-eye image and a right-eye image which have a parallax therebetween. Specifically, the digital tuner 21 of the signal processing section 20 selects a desired signal (stream) from a broadcast wave (input signal Din) which is received by an antenna and is supplied through an antenna terminal TA. The MPEG decoder 22 extracts a picture signal and an audio signal from the stream selected by the digital tuner 21. The picture signal processing circuit 23 performs picture signal processing on a picture signal extracted by the MPEG decoder 22, and generates a frame switching signal SF. The graphics generation circuit 24 generates OSD information to be superimposed onto a picture supplied from the picture signal processing circuit 23, thereby generating the picture signal D1. The audio signal processing circuit 25 performs audio signal processing on an audio signal extracted by the MPEG decoder 22 to generate the audio signal D2. The display drive section 11 drives the display section 12, based on the picture signal D1. The display section 12 alternately displays the left-eye image and the right-eye image, based on a signal supplied from the display drive section 11. The audio amplification section 13 amplifies the audio signal D2 to drive the speaker 14. The speaker 14 outputs the audio signal as an audio.

The shutter control section 15 generates, based on the frame switching signal SF supplied from the picture signal processing circuit 23, the shutter control signal CTL synchronized with the display of the left-eye image and the right-eye image on the display device 10 to supply the shutter control signal CTL to the shutter eyeglasses 60 through radio communication. The reception section 61 of the shutter eyeglasses 60 receives the shutter control signal CTL supplied from the shutter control section 15 through radio communication. The determination circuit 62 determines the control code C of the shutter control signal CTL received by the reception section 61 to determine shutter open/close instruction for the left-eye shutter 6L and the right-eye shutter 6R. The shutter drive circuit 63 generates, based on the signal supplied from the determination circuit 62, a control signal for left-eye shutter CTLL and a control signal for right-eye shutter CTLR to be supplied to the left-eye shutter 6L and the right-eye shutter 6R, respectively. The left-eye shutter 6L performs open/close operation of the shutter, based on the control signal for left-eye shutter CTLL, and the right-eye shutter 6R performs open/close operation of the shutter based on the control signal for right-eye shutter CTLR.

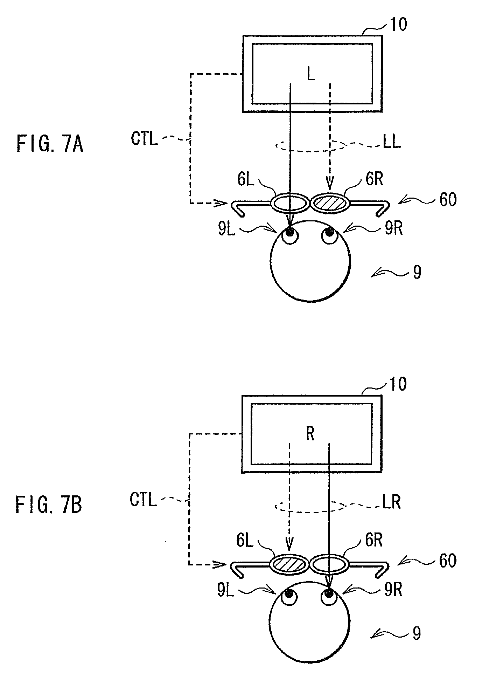

FIG. 7 schematically illustrates general operation of the display system 1. In FIG. 7, (A) illustrates operation when a left-eye image L is displayed, and (B) illustrates operation when a right-eye image R is displayed. When the display device 10 displays the left-eye image L, the left-eye shutter 6L of the shutter eyeglass 60 is opened and the right-eye shutter 6R thereof is closed as illustrated in (A) of FIG. 7. At this time, a viewer 9 views the left-eye image L with his left eye 9L. On the other hand, when the display device 10 displays the right-eye image R, the left-eye shutter 6L of the shutter eyeglass 60 is closed and the right-eye shutter 6R thereof is opened as illustrated in (B) of FIG. 7. At this time, the viewer 9 views the right-eye image R with his right eye 9R. When these operations are alternately repeated, the viewer 9 is allowed to perceive the picture configured of these images as a stereoscopic picture with depth due to the parallax between the left-eye image L and the right-eye image R.

### (Degree of Freedom in Open /Close Duty Ratio Setting)

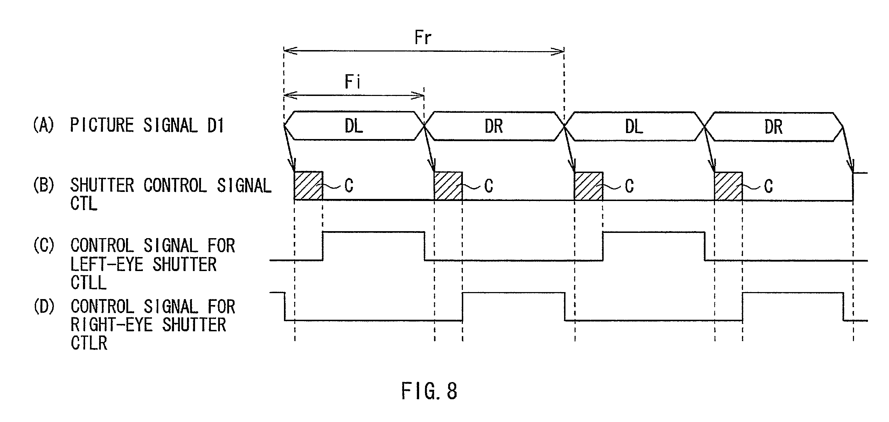

FIG. 8 illustrates a timing waveform chart of shutter control to the shutter eyeglasses 60, and illustrates an example where the open/close duty ratio is equal to or less than 50%. In FIG. 8, (A) illustrates a waveform of the picture signal D1, (B) illustrates the shutter control signal CTL, (C) illustrates a waveform of the control signal for left-eye shutter CTLL, and (D) illustrates a waveform of the control signal for right-eye shutter CTLR. For convenience of description, it is assumed that the left-eye shutter 6L is opened when the control signal for left-eye shutter CTLL is at high level, and is closed when the control signal CTLL is at low level. Likewise, it is assumed that the right-eye shutter 6R is opened when the control signal for right-eye shutter CTLR is at high level, and is closed when the control signal CTLR is at low level.

As illustrated in FIG. 8, the display device 10 generates the control code C of the shutter control signal CTL ((B) of FIG. 8) in synchronization with the picture signal D1 ((A) of FIG. 8). More specifically, the picture signal processing circuit 23 of the display device 10 generates the frame switching signal SF synchronized with the image signal for left eye DL and the image signal for right eye DR in the picture signal D1, and the shutter control section 15 generates the control code C, based on the frame switching signal SF. At this time, the shutter control section 15 generates a control code C for controlling the left-eye shutter 6L when the picture signal D1 is the image signal for left eye DL, and generates a control code C for controlling the right-eye shutter 6R when the picture signal D1 is the image signal for right eye DR. As illustrated in FIG. 6, the control code C includes at least the start bit SB, the command bit CB, and the duty flag DF. In addition, when instructing the open/close duty ratio (shutter open time), the control code C further includes the duty bit DB.

The determination circuit 62 of the shutter eyeglasses 60 decodes the control code C, and the shutter drive circuit 63 then generates the control signal for left-eye shutter CTLL and the control signal for right-eye shutter CTLR, based on the decoding result ((C) and (D) of FIG. 8). Specifically, for example, when the picture signal D1 is the image signal for left eye DL ((A) of FIG. 8), the control signal for left-eye shutter CTLL changes from low level to high level after the decoding of the control code C is finished ((B) of FIG. 8), and changes form high level to low level after the elapse of a time based on the open/close duty ratio instructed by the control code C ((C) of FIG. 8). The left-eye shutter 6L of the shutter eyeglasses 60 is opened only during the period when the control signal for left-eye shutter CTLL is at high level, and in this period, the viewer 9 is allowed to view the left-eye image L. Likewise, for example, when the picture signal D1 is the image signal for right eye DR ((A) of FIG. 8), the control signal for right-eye shutter CTLR changes from low level to high level after the decoding of the control code C is finished ((B) of FIG. 8), and changes from high level to low level after the elapse of a time based on the open/close duty ratio instructed by the control code C ((D) of FIG. 8). The right-eye shutter 6R of the shutter eyeglasses 60 is opened only during the period when the control signal for right-eye shutter CTLR is at high level, and in this period, the viewer 9 is allowed to view the right-eye image R.

The open operation timing of the shutter eyeglasses 60 is controlled by the picture signal processing circuit 23 of the display device 10. In other words, the picture signal processing circuit 23 changes the output timing of the frame switching signal SF to change the generation timing of the control code C of the shutter control signal CTL in the shutter control section 15, thereby controlling the open operation timing of the shutter eyeglasses 60. The close operation timing of the shutter eyeglasses 60 is controlled by the open operation timing and the open/close duty ratio instructed by the control code C. In other words, for the left-eye shutter 6L and the right-eye shutter 6R, open/close operation is allowed to be freely set by setting both of the open operation timing and the open time.

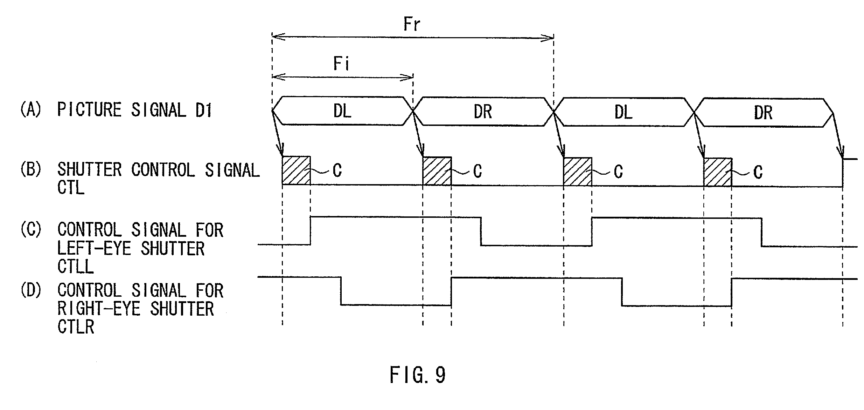

FIG. 9 illustrates a timing waveform chart of the shutter control to the shutter eyeglasses 60, and illustrates an example in which the open/close duty ratio is equal to or larger than 50%. In FIG. 9, (A) illustrates a waveform of the picture signal D1, (B) illustrates the shutter control signal CTL, (C) illustrates a waveform of the control signal for left-eye shutter CTLL, and (D) illustrates a waveform of the control signal for right-eye shutter CTLR.

Similar to the case where the open/close duty ratio is equal to or less than 50% (FIG. 8), the display device 10 generates the control code C of the shutter control signal CTL ((B) of FIG. 9), and the shutter drive circuit 63 generates the control signal for left-eye shutter CTLL and the control signal for right-eye shutter CTLR ((C) and (D) of FIG. 9). In this example, since the open/close duty ratio is equal to or larger than 50%, each of the control signal for left-eye shutter CTLL and the control signal for right-eye shutter CTLR changes from high level to low level at timing different from that in FIG. 8. In other words, the timing in which the control signal for left-eye shutter CTLL changes from high level to low level exists before the control code C for the right-eye image DR in FIG. 8, whereas the timing exists after the control code C for the right-eye image DR in FIG. 9. Likewise, the timing in which the control signal for right-eye shutter CTLR changes from high level to low level exists before the control code C for the image for the left eye DL in FIG. 8, whereas the timing exists after the control code C for the left-eye image DL in FIG. 9. The left-eye shutter 6L of the shutter eyeglasses 60 is opened only when the control signal for left-eye shutter CTLL is at high level, and thus the viewer 9 is allowed to view the left-eye image L. Likewise, the right-eye shutter 6R of the shutter eyeglasses 60 is opened only when the control signal for right-eye shutter CTLR is at high level, and thus the viewer 9 is allowed to view the right-eye image R.

In the display system 1, the open/close duty ratio is allowed to be set in a wide range regardless of 50% or larger, or less. For example, when the open/close duty ratio is increased, the open time of the left-eye shutter 6L and of the right-eye shutter 6R may be prolonged, and thus display with high luminance may be achieved. When the high luminance is not necessary, the luminance of the backlight 46 may be decreased, and thus low power consumption may be achieved.

As described above, in the display system 1, the open/close operation of the left-eye shutter 6L and the right-eye shutter 6R of the shutter eyeglasses 60 is allowed to be freely set based on the shutter control signal CTL supplied from the display device 10.

### (Power Consumed by Transmission Section 29)

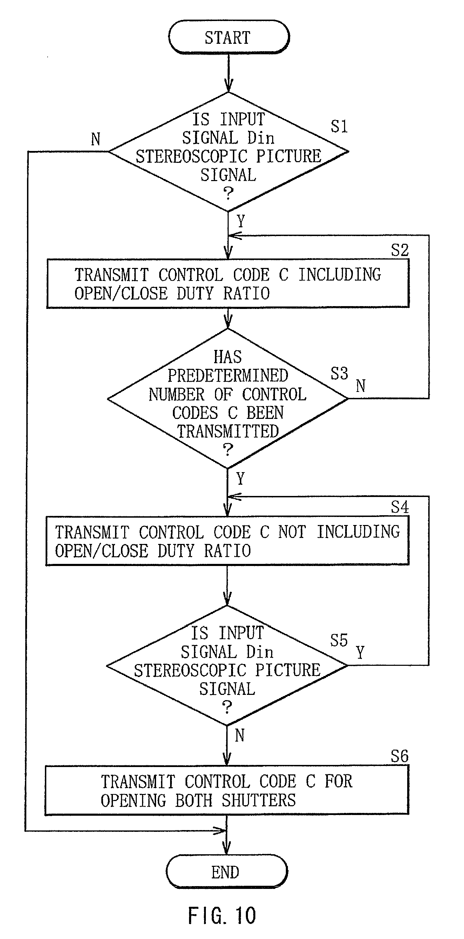

FIG. 10 is a flowchart of the operation of the display device 10 when a stereoscopic picture signal is input as the input signal Din.

First, the picture signal processing circuit 23 of the signal processing section 20 detects whether the input signal Din of the signal processing section 20 is a stereoscopic picture signal (step S1). When the input signal Din is a stereoscopic picture signal, the process proceeds to step S2, and when the input signal Din is not a stereoscopic picture signal, the flow is ended.

Next, the shutter control section 15 transmits the control code C including the duty bit DB (the open/close duty ratio) to the shutter eyeglasses 60 (step S2). Specifically, first, the shutter control signal generation section 28 generates the control code C of 12-bit length including the start bit SB, the command bit CB, the duty flag DF set to "1", and the duty bit DB setting the open/close duty ratio. Herein, for example, "001" (right-eye shutter is opened) or "011" (left-eye shutter is opened) is used as the command bit CB. Then, the transmission section 29 transmits the shutter control signal CTL including the control code C to the shutter eyeglasses 60. The shutter eyeglasses 60 allows the shutter to be opened based on the instruction of the command bit CB and the like, and allows the shutter to be closed after the elapse of a time according to the instruction of the duty bit DB.

Subsequently, the shutter control section 15 determines whether a predetermined number of control codes C have been transmitted (step S3). In other words, the shutter control section 15 counts the number of times the control code C including the duty bit DB is transmitted, and determines whether the count value reaches a predetermined number (for example, 2). When the count value does not reach the predetermined number, the process returns to step S2, and the shutter control section 15 transmits again the control code C including the open/close duty ratio. The shutter control section 15 repeats the operation until the count value reaches the predetermined number. When the count value reaches the predetermined number, the process proceeds to step 4.

Then, the shutter control section 15 transmits the control code C not including the duty bit DB (the open/close duty ratio) to the shutter eyeglasses 60 (step S4). Specifically, first, the shutter control signal generation section 28 generates the control code C of 8-bit length including the start bit SB, the command bit CB, and the duty flag DF set to "0" as illustrated in FIG. 6. Then, the transmission section 29 transmits the shutter control signal CTL including the control code C to the shutter eyeglasses 60. In this case, the shutter eyeglasses 60 first allow the shutter to be opened based on the instruction of the command bit CB and the like. Then, after the elapse of a time according to the duty bit DB (duty bit DB received at step S2) lastly received, the shutter eyeglasses 60 allow the shutter to be closed.

Next, the picture signal processing circuit 23 of the signal processing section 20 detects whether the input signal Din of the signal processing section 20 is a stereoscopic picture signal (step S5). When the input signal Din is a stereoscopic picture signal, the process returns to step S4, and the shutter control section 15 transmits again the control code C not including the duty bit DB. The shutter control section 15 repeats the operation as long as the input signal Din is a stereoscopic picture signal. Upon the change of the input signal Din from a stereoscopic picture signal to a normal picture signal, the process proceeds to step S6.

Finally, the shutter control section 15 transmits, to the shutter eyeglasses 60, the control code C allowing both shutters of the shutter eyeglasses 60 to be opened (step S6). More specifically, first, the shutter control signal generation section 28 generates the control code C of 8-bit length including the start bit SB, the command bit CB set to "100", and the duty flag DF set to "0". Then, the transmission section 29 transmits the shutter control signal CTL including the control code C to the shutter eyeglasses 60. The shutter eyeglasses 60 allows the left-eye shutter 6L and the right-eye shutter 6R to be opened based on the instruction of the command bit CB and the like.

In this way, the flow is completed. The display device 10 constantly monitors whether the input signal Din is a stereoscopic picture signal. In other words, the operation illustrated in FIG. 10 is constantly performed. Incidentally, in this example, the control code C allowing both shutters to be opened is transmitted once only after the input signal Din changes from a stereoscopic picture signal to a normal picture signal, however, this is not limitative. Alternatively, for example, a predetermined number of control codes C may be transmitted, or the control code C may be periodically and intermittently transmitted while the input signal Din is a normal picture signal.

As illustrated in FIG. 10, when the shutter control section 15 transmits the shutter control signal CTL to the shutter eyeglasses 60, the duty bit DB (the open/close duty ratio) is included only in a predetermined number of control codes C. In other words, the control code C transmitted by the shutter control section 15 hardly includes the duty bit DB. In this way, reduction of the duty bit DB to be transmitted leads to reduction of power consumed by the transmission section 29 of the display device 10. In other words, as illustrated in FIG. 6, when the duty bit DB is transmitted, in this example, total 12 bits from the start bit SB to the duty bit DB are transmitted. On the other hand, when the duty bit DB is not transmitted, total 8-bits from the start bit SB to the duty flag DF are transmitted. Accordingly, the above-described predetermined number is set small to reduce the number of the control codes C including the duty bit DB so that the data amount to be transmitted may be reduced and the power consumed by the transmission section 29 may be decreased.

When the above-described predetermined number is increased, for example, even in a case where the shutter control section 15 and the shutter eyeglasses 60 are difficult to communicate through radio communication, the duty bit DB (the open/close duty ratio) is allowed to be transmitted to the shutter eyeglasses 60 more reliably. To be more specific, for example, in a case where infrared rays are used for radio communication, there is a risk that radio communication becomes difficult when the viewer 9 using the shutter eyeglasses 60 looks the other way from the display device 10. In addition, for example, in a case where radio waves are used for radio communication, there is a risk that the radio communication becomes difficult when interference due to the other radio waves occurs. Since the transmission section 29 transmits the above-described predetermined number of the duty bits DB, the larger the predetermined number is, the more reliably the duty bit DB is transmitted to the shutter eyeglasses 60. Therefore, the above-described predetermined number is determined in viewpoint of both of the power consumed by the transmission section 29 and certainty of communication. In other words, the above-described predetermined number is not limited to the exemplified number 2, and may be any number as long as the power consumed by the transmission section 29 and the certainty of communication are sufficient, depending on its use. Therefore, the predetermined number may be larger than or smaller than 2.

### (Fail Safe Function in Open/Close Duty Ratio Setting)

As illustrated in FIG. 6, when the duty bit DB of the control code C is "0000", the shutter eyeglasses 60 operates to maintain as it is the open/close duty ratio lastly instructed without changing the open/close duty ratio. Accordingly, the display system 1 may achieve shutter open/close operation more reliably as described below.

When receiving the shutter control signal CTL from the display device 10, the shutter eyeglasses 60 may possibly make a false determination on the received control code C due to influence of noise or the like. As an example, it is assumed a case where the display device 10 transmits the control code C not including the duty bit DB (the open/close duty ratio) to the shutter eyeglasses 60. In this case, as illustrated in FIG. 6, the control code C is configured of the start bit SB, the command bit CB, and the duty flag DF set to "0". In other words, the duty bit DB is not added subsequent to the duty flag DF. In this case, for example, when interference occurs in radio communication, at the time of receiving the control code C, the shutter eyeglasses 60 may possibly make a false determination that the duty flag DF is "1". In this case, the determination circuit 62 of the shutter eyeglasses 60 operates so as to set the open/close duty ratio, based on the duty bit DB subsequent to the duty flag DF. At this time, since the control code C does not include the duty bit DB, the determination circuit 62 determines that the duty bit DB is "0000". Accordingly, the determination circuit 62 operates to maintain the open/close duty ratio which is lastly instructed by the previous control code C. In other words, the shutter eyeglasses 60 hardly make a false setting of the open/close duty ratio even in a case where false determination of the duty flag DF occurs due to influence of noise or the like.

As described above, when all bits included in the duty bit DB are inactive logic, the operation is performed while the open/close duty ratio is maintained as it is, which is lastly instructed. Therefore, even when the duty flag DF is determined incorrectly, the shutter open/close operation is achievable more reliably without incorrect setting of the open/close duty ratio.

### [Comparison with Comparative Examples]

Next, functions in the embodiment will be described in comparison with some comparative examples.

### (Comparative Example 1)

Comparative example 1 is a display system disclosed in Non-Patent Literature 1, and in the system, shutter eyeglasses are controlled with use of a shutter control signal which is not coded.

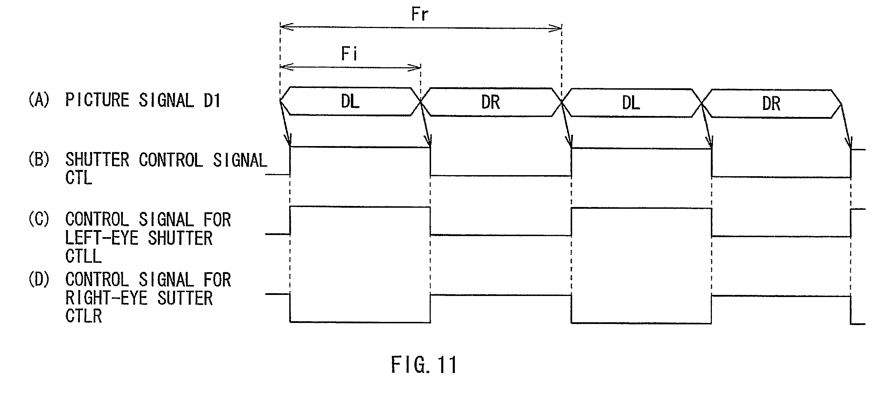

FIG. 11 illustrates a timing waveform chart of shutter control according to the comparative example 1. In FIG. 11, (A) illustrates a waveform of the picture signal D1, (B) illustrates the shutter control signal CTL, (C) illustrates a waveform of the control signal for left-eye shutter CTLL, and (D) illustrates a waveform of the control signal for right-eye shutter CTLR.

As illustrated in FIG. 11, a display device according to the comparative example 1 generates the shutter control signal CTL ((B) of FIG. 11), in synchronization with the picture signal D1 ((A) of FIG. 11). The shutter control signal CTL is not coded. In other words, in the comparative example 1, the shutter control signal CTL does not include the control code C. The shutter control signal CTL merely instructs the left-eye shutter 6L and the right-eye shutter 6R to be opened and to be closed, respectively, when being at high level. The shutter control signal CTL merely instruct the left-eye shutter 6L and the right-eye shutter 6R to be closed and to be opened, respectively, when being at low level. The shutter eyeglasses receive the shutter control signal CTL to generate the control signal for left-eye shutter CTLL and the control signal for right-eye shutter CTLR ((C) and (D) of FIG. 11). Then, each of the left-eye shutter 6L and the right-eye shutter 6R performs open/close operation of the shutter based on the corresponding signal.

In the comparative example 1, the open time of the left-eye shutter and of the right-eye shutter are not allowed to be set. In other words, the open/close duty ratio of each of the left-eye shutter 6L and the right-eye shutter 6R is 50%. In addition, since the shutter control signal CTL is at high level during a half of the frame period Fr, for example, when the shutter control signal CTL is transmitted in a state where the opened state and the closed state of the shutter correspond to the light-emission and non-light-emission of infrared rays, respectively, the power consumed by the transmission section becomes larger.

On the other hand, in the display system 1 according to the embodiment, the shutter control signal CTL is coded and the open/close duty ratio is allowed to be set. As a result, the open time of each of the left-eye shutter 6L and the right-eye shutter 6R is allowed to be freely set. Moreover, the shutter control signal CTL is coded, and the number of times the duty bit DB (the open/close duty ratio) is transmitted is suppressed to minimum. Accordingly, power consumed by the transmission section 29 of the display device 10, which transmits the shutter control signal CTL, may be suppressed.

### (Comparative Example 2)

Next, a display system according to a comparative example 2 will be described. In the comparative example 2, shutter eyeglasses are controlled with use of a shutter control signal including only information of open operation timing of the left-eye shutter 6L.

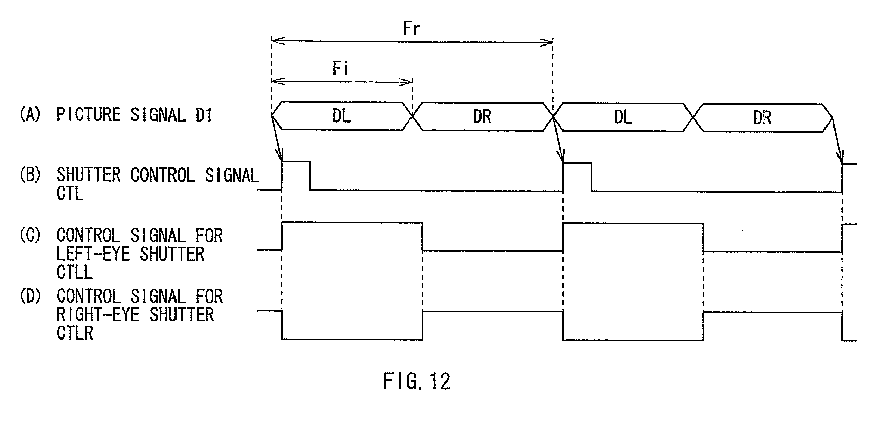

FIG. 12 illustrates a timing waveform chart of shutter control according to the comparative example 2. In FIG. 12, (A) illustrates a waveform of the picture signal D1, (B) illustrates the shutter control signal CTL, (C) illustrates a waveform of the control signal for left-eye shutter CTLL, and (D) illustrates a waveform of the control signal for right-eye shutter CTLR.

As illustrated in FIG. 12, the display device according to the comparative example 2 generates the shutter control signal CTL ((B) of FIG. 12), in synchronization with the picture signal D1 ((A) of FIG. 12). In this example, when the picture signal D1 is the image signal for left eye DL, the shutter control signal CTL is at high level during a predetermined period. The shutter control signal CTL includes only information of the open operation timing of the left-eye shutter 6L, and does not include information of the open operation timing of the right-eye shutter 6R and information instructing the close operation timing of the shutter. The shutter eyeglasses receive the shutter control signal CTL to generate the control signal for left-eye CTLL and the control signal for right-eye CTLR ((C) and (D) of FIG. 12). At this time, the control signal for left-eye shutter CTLL changes from low level to high level when the shutter control signal CTL changes from low level to high level, and then changes from high level to low level after the elapse of a time corresponding to a half of the frame period Fr ((C) of FIG. 12). In addition, the control signal for right-eye shutter CTLR changes from high level to low level when the shutter control signal CTL changes from low level to high level, and then changes from low level to high level after the elapse of a time corresponding to a half of the frame period Fr ((D) of FIG. 12). Then, each of the left-eye shutter 6L and the right-eye shutter 6R performs open/close operation of the shutter based on the corresponding signal.

In the comparative example 2, the open time of each of the left-eye shutter 6L and the right-eye shutter 6R is not allowed to be freely set. In other words, the open/close duty ratio of each of the left-eye shutter 6L and the right-eye shutter 6R is 50%. In addition, since the shutter control signal CTL includes only information of the open operation timing of the left-eye shutter 6L, the shutter eyeglasses need to determine by themselves the close operation timing of the left-eye shutter 6L and the open operation timing and the close operation timing of the right-eye shutter 6R, based on the shutter control signal CTL. Consequently, process in the shutter eyeglasses may be complicated, and power consumed by the shutter eyeglasses may be increased accordingly.

On the other hand, in the display system 1 according to the embodiment, the shutter control signal CTL is coded and the open/close duty ratio is allowed to be set. Therefore, the open time of each of the left-eye shutter 6L and the right-eye shutter 6R is allowed to be freely set. In addition, the open operation timing and the open time of the left-eye shutter 6L and the right-eye shutter 6R are directly instructed with use of the control code C so that the process in the shutter eyeglasses is simplified.

### (Comparative Example 3)

Next, a display system according to a comparative example 3 will be described. In the comparative example 3, the shutter control signal is coded to control the shutter eyeglasses so that the open operation timing and the close operation timing of the shutter of each of the left-eye shutter 6L and the right-eye shutter are instructed.

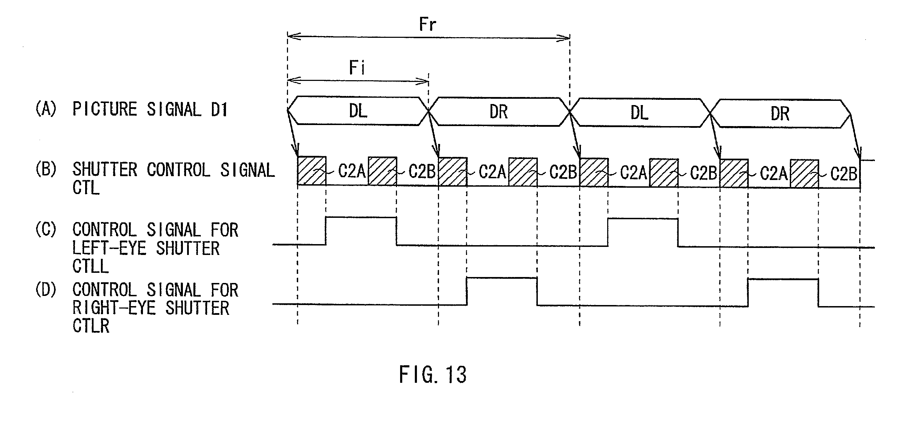

FIG. 13 illustrates a timing waveform chart of shutter control according to the comparative example 3. In FIG. 13, (A) illustrates a waveform of the picture signal D1, (B) illustrates the shutter control signal CTL, (C) illustrates a waveform of the control signal for left-eye shutter CTLL, and (D) illustrates a waveform of the control signal for right-eye shutter CTLR.

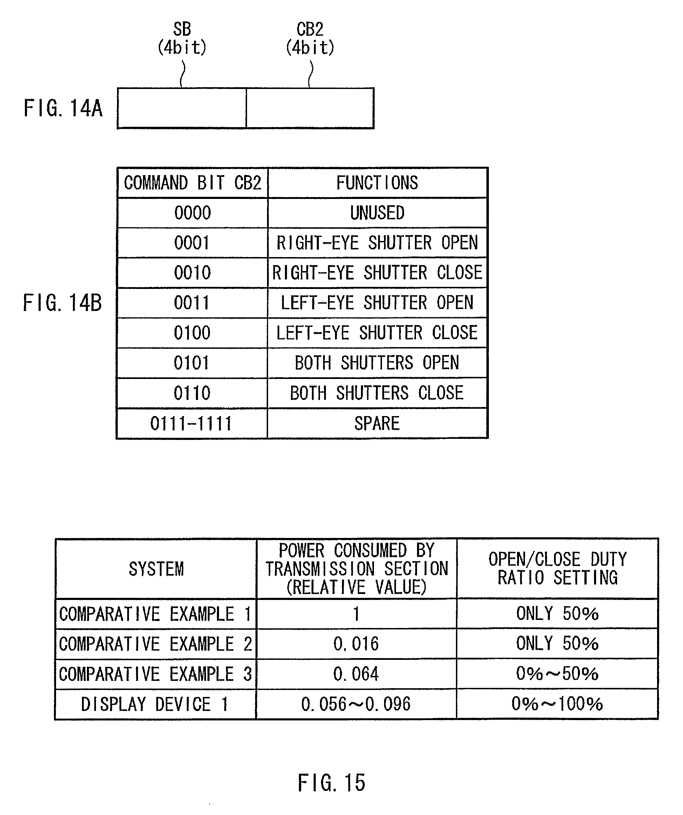

FIG. 14 illustrates a structure example of a control code C2 of the shutter control signal CTL according to the comparative example 3. In FIG. 14, (A) illustrates a general structure of the control code C2, and (B) illustrates functions of a command bit CB2 relating to the control code C2. The control code C2 is a code with a fixed length of total 8 bits, configured of the start bit SB of 4 bits and the command bit CB2 of 4 bits.

As illustrated in FIG. 13, the display device according to the comparative example 3 generates control codes C2A and C2B ((B) of FIG. 13) of the shutter control signal CTL illustrated in FIG. 14, in synchronization with the picture signal D1 ((A) of FIG. 13). Herein, the control code C2A is intended to instruct the open timing of the shutter, and the control code C2B is intended to instruct the close timing of the shutter. The shutter eyeglasses receive the shutter control signal CTL to generate the control signal for left-eye shutter CTLL and the control signal for right-eye shutter CTLR ((C) and (D) of FIG. 13). More specifically, in the case where the picture signal D1 is the image signal for left eye DL, the control signal for left-eye shutter CTLL changes from low level to high level after decoding of the control code C2A (command bit CB2: "0011") of the shutter control signal CTL is finished, and changes from high level to low level after decoding of the control code C2B (command bit CB2: "0100") is finished ((C) of FIG. 13). Likewise, in the case where the picture signal D1 is the image signal for right eye DR, the control signal for right-eye shutter CTLR changes from low level to high level after decoding of the control code C2A (command bit CB2: "0001") of the shutter control signal CTL is finished, and changes from high level to low level after decoding of the control code C2B (command bit CB2: "0010") is finished ((D) of FIG. 13). Then, the left-eye shutter 6L and the right-eye shutter 6R each perform the open/close operation of the shutter based on the corresponding signal.

In the comparative example 3, the open time of the left-eye shutter 6L or the right-eye shutter 6R is not allowed to be longer than a field period Fi (a half of the time of the frame period Fr). In other words, the open/close duty ratio of the left-eye shutter 6L or the right-eye shutter 6R is not allowed to be larger than 50%. This is because if the generation timing of the control code C2B is delayed in each of the field periods Fi in order to make the open/close duty ratio larger than 50%, the control codes C2A and C2B are not within one field period Fi, and therefore the control code C2B overlaps the control code C2A in the subsequent field period Fi. In this case, for example, the control codes C2A and C2B are transmitted to the left-eye shutter 6L and the right-eye shutter 6R once, respectively, every four field periods, instead of every two field periods as illustrated in FIG. 13. In other words, to perform two open/close operations every four field periods, the shutter eyeglasses need to perform open/close operation one more each in addition to the one open/close operation of the shutter by each of the control codes C2A and C2B, and need to determine the open/close timing by themselves. Accordingly, there is a possibility that the processing performed by the shutter eyeglasses becomes complicated and the power consumed by the shutter eyeglasses is increased.

On the other hand, in the display system 1 according to the embodiment, since the open operation timing information and the open time information are included in one control code C, the instructions are allowed to be within one field period Fi so that the open/close duty ratio may be equal to or larger than 50%.

Moreover, in the comparative example 3, as illustrated in FIG. 14, each of the control codes C has a fixed length of 8 bits, and needs to be transmitted twice within one field period Fi. On the other hand, in the embodiment, as illustrated in FIG. 6, although each of the control codes C has a variable length of 8 bits to 12 bits, when the instruction of the open/close duty ratio is minimized, almost all control codes C have 8-bits length. In addition, when the display device 10 transmits the control code C, since the control code not instructing the open/close duty ratio has the duty bit DB of "0", the control code C substantially has 7-bit length depending on communication system. In addition, in the embodiment, the control code C needs to be transmitted once within one field period Fi. Consequently, the power consumed by the transmission section 29 in the embodiment is allowed to be lower than that in the case of the comparative example 3.

FIG. 15 illustrates a comparison of the power consumed by the transmission section and the degree of freedom in setting of the open/close duty ratio in the embodiment and the above-described comparative examples 1 to 3.

The power consumed by the transmission section is calculated on the assumption that the field frequency is 48 Hz (field period Fi = 20.8 msec), the pulse width of the comparative example 2 is of 4kHz (250 usec), and the pulse frequency of the comparative example 3 and the display device 1 according to the embodiment is 25 kHz (pulse width = 40 usec). When the power consumed by the transmission section in the comparative example 1 is assumed to be 1, the power consumed by the transmission section in the comparative examples 2 and 3 is 0.016 and 0.064, respectively. On the other hand, the power consumed by the transmission section 29 in the embodiment is 0.056 to 0.096. Herein, the value 0.056 corresponds to a case where the open/close duty ratio is not instructed (the duty bit DB is not included), and the value 0.096 corresponds to a case where the open/close duty ratio is instructed (the duty bit DB is included) in all field periods Fi. In other words, the power consumed by the transmission section 29 in the embodiment may be reduced to approximately 0.056 by minimizing the instructions of the open/close duty ratio.

As described above, the open/close duty ratio is not allowed to be freely set and is fixed to 50% in the comparative examples 1 and 2, and is not allowed to be set to 50% or larger in principle in the comparative example 3. On the other hand, in the embodiment, the open/close duty ratio is allowed to be set in a range of 0 to 100% in principle. Therefore, in the embodiment, the open/close timings of the shutters may be set with an increased degree of freedom.

### [Effects]

As described above, in the embodiment, one control code includes the open operation timing information and the open time information. Therefore, the open/close duty ratio is allowed to be larger than 50%, and the increased degree of freedom in setting of the open/close timings of the shutters is achievable.

Moreover, in the embodiment, the duty bit DB is included in not all control codes but only in a predetermined number of control codes. Therefore, data amount when the display device transmits the shutter control signal to the shutter eyeglasses is minimized so that the power consumed by the transmission section may be reduced.

Furthermore, in the embodiment, when all bits of the duty bit DB are inactive logic, the open/close duty ratio lastly instructed is maintained for operation. Therefore, even when the false determination of the duty flag DF occurs, the open/close duty ratio is correctly set, and thus the open/close operation of the shutters may be more reliably achieved.

### [Modification]

In the above-described embodiment, in the display device 10, the duty bit DB is included only in a predetermined number of control codes C immediately after the input signal Din changes from a normal picture signal to a stereoscopic picture signal. This is not limitative, and for example, while the input signal Din is a stereoscopic picture signal, the duty bit DB may be periodically and intermittently included in control codes. In this case, data amount when the display device 10 transmits the shutter control signal CTL to the shutter eyeglasses 60 is allowed to be reduced, and therefore, the power consumed by the transmission section is allowed to be reduced.

### [2. Second Embodiment]

Next, a display system according to a second embodiment of the invention will be described. A display system 2 is a multi-view system allowing a plurality of viewers to view different pictures displayed on one display device. In the embodiment, shutter eyeglasses are different from those in the above-described first embodiment. In other words, in the first embodiment (FIG. 1 and FIG. 6), each of the right-eye shutter 6R and the left-eye shutter 6L is instructed to perform open/close operation. Instead, in the embodiment, each of the plural pairs of shutter eyeglasses is instructed to perform open/close operation on a pair of shutter eyeglasses basis (on a pair of right-eye shutter 6R and left-eye shutter 6L basis). Other configuration is the same as that in the above-described first embodiment (FIG. 1 to FIG. 5). As an example, a multi-view system targeting two viewers will be described below. Note that like numerals are used to designate substantially like components of the display system 1 according to the above-described first embodiment, and the description thereof is appropriately omitted.

### [Configuration Example]

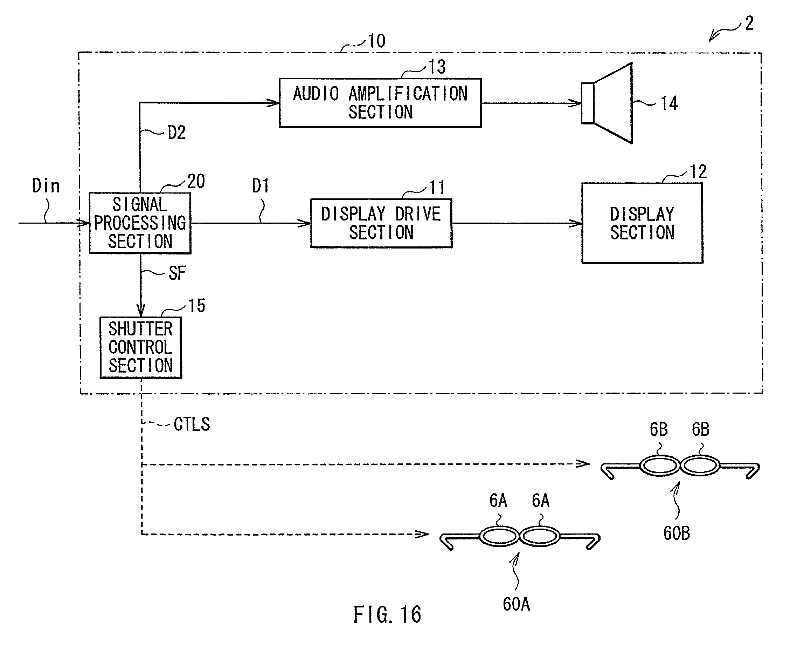

FIG. 16 illustrates a configuration example of the display system 2. The display system 2 includes the display device 10 and two pairs of shutter eyeglasses 60A and 60B.

The display device 10 is the same as the display device 10 (FIG. 2) according to the first embodiment except for an input signal Din. In other words, the display device 10 displays a picture on the display section 12, based on the input signal Din including a picture signal for two viewers. In this case, the picture signal for two viewers is a picture signal obtained by alternately arranging images for a viewer 9A and images for a viewer 9B. The shutter control section 15 of the display device 10 generates the shutter control signal CTLS, based on the frame switching signal SF supplied from the signal processing section 20, and supplies the shutter control signal CTLS to the shutter eyeglasses 60A and 60B through radio communication using, for example, infrared rays or radio waves.

The shutter eyeglasses 60A and 60B are used when the two viewers (not illustrated) view two different pictures displayed on the display device 10. The shutter eyeglasses 60A include a pair of shutters 6A, and the shutter eyeglasses 60B include a pair of shutters 6B. The pair of shutters 6A is simultaneously controlled to open/close by the shutter control signal CTLS, and likewise, the pair of shutters 6B is simultaneously controlled to open/close by the shutter control signal CTLS.

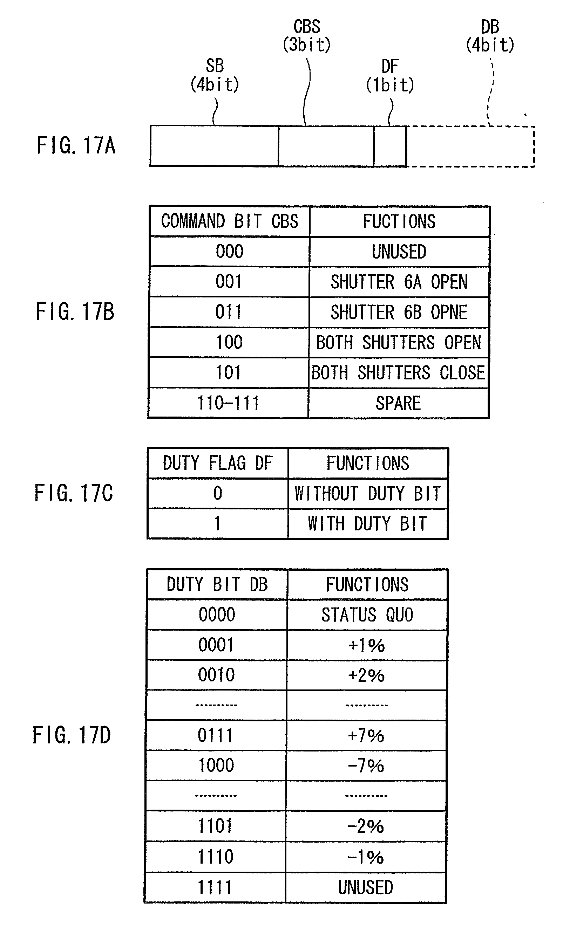

FIG. 17 illustrates a structure example of a control code CS of the shutter control signal CTLS. In FIG. 17, (A) illustrates a general structure of the control code CS, (B) illustrates functions of a command bit CBS relating to the control code CS, (C) illustrates functions of a duty flag DF relating to the control code CS, and (D) illustrates functions of a duty bit DB relating to the control code CS.

As illustrated in (B) of FIG. 17, the command bit CBS is intended to instruct the shutters 6A of the shutter eyeglasses 60A and the shutters 6B of the shutter eyeglasses 60B to perform open/close operation. Specifically, with use of the command bit CBS, for example, open operation of the shutters 6A (command bit CBS: "001 "), open operation of the shutters 6B (command bit CBS: "011"), close operation of both of the shutters 6A and 6B (command bit CBS: "101"), and the like are instructed. These instructions are used, for example, when the input signal Din includes the picture signal for two viewers. In addition, with use of the command bit CBS, open operation of both of the shutters 6A and 6B (command bit CBS: "100") may be instructed. This instruction is used, for example, when the input signal Din is a normal picture signal.

With the above-described configuration, the shutters 6A of the shutter eyeglasses 60A and the shutters 6B of the shutter eyeglasses 60B perform open/close operation of the shutters, based on the shutter control signal CTLS and in synchronization with the image for the viewer 9A and the image for the viewer 9B which are displayed on the display device 10 in a time-divisional manner.

Herein, the control code CS of the shutter control signal CTLS corresponds to a specific example of "a shutter control code" in the invention. The shutters 6A and the shutters 6B correspond to a specific example of "one or more first shutters and one or more second shutters" in the invention. The command bit CBS corresponds to a specific example of "open operation timing information" in the invention.

### [Operation and Functions]

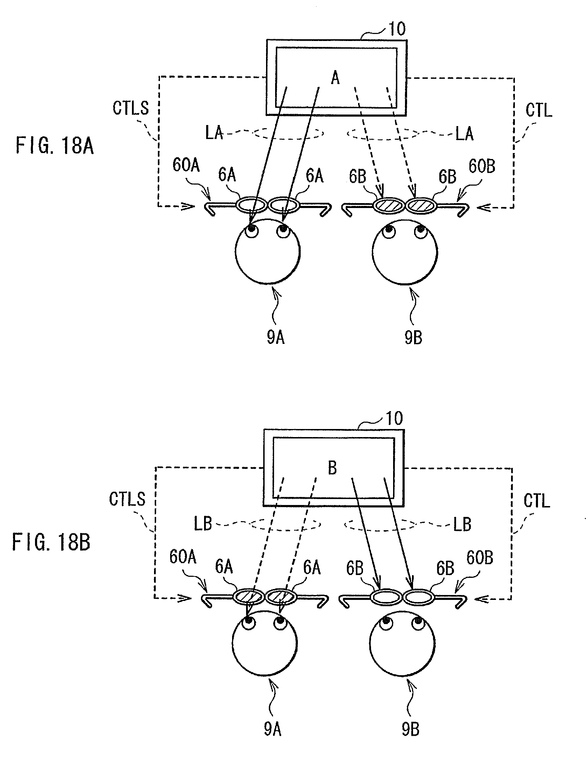

FIG. 18 schematically illustrates general operation of the display system 2. In FIG. 18, (A) illustrates operation when an image A for the viewer 9A is displayed, and (B) illustrates operation when an image B for the viewer 9B is displayed. When the display device 10 displays the image A, as illustrated in (A) of FIG. 18, the shutters 6A of the shutter eyeglasses 60A are opened and the shutters 6B of the shutter eyeglasses 60B are closed. At this time, the viewer 9A views the image A. On the other hand, when the display device 10 displays the image B, as illustrated in (B) of FIG. 18, the shutters 6A of the shutter eyeglasses 60A are closed and the shutters 6B of the shutter eyeglasses 60B are opened. At this time, the viewer 9B views the image B. By alternately repeating these operations, the display device 10 allows the viewer 9A to view a picture configured of the image A and allows the viewer 9B to view a picture configured of the image B. Therefore, a multi-view system in which a plurality of viewers may view a plurality of pictures displayed on one display device, respectively, may be realized.

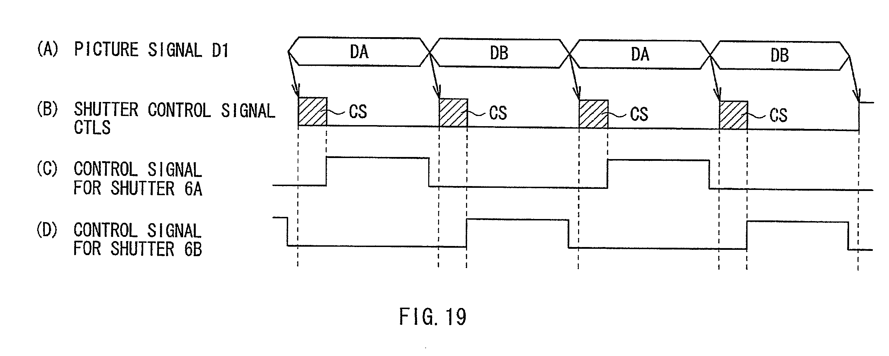

FIG. 19 illustrates a timing waveform chart of shutter control to the shutters 6A of the shutter eyeglasses 60A and the shutters 6B of the shutter eyeglasses 60B, and illustrates an example when the open/close duty ratio is equal to or less than 50%. In FIG. 19, (A) illustrates a waveform of the picture signal D1, (B) illustrates the shutter control signal CTLS, (C) illustrates a waveform of a control signal for the shutters 6A, and (D) illustrates a waveform of a control signal for the shutters 6B. For convenience of description, it is assumed that the shutters 6A are opened when the control signal for the shutters 6A is at high level, and are closed when the control signal is at low level. Likewise, the shutters 6B are opened when the control signal for the shutters 6B is at high level, and are closed when the control signal is at low level.

As illustrated in FIG. 19, the display device 10 generates the control code CS of the shutter control signal CTLS ((B) of FIG. 19), the shutter eyeglasses 60A generate the control signal for the shutters 6A ((C) of FIG. 19), and the shutter eyeglasses 60B generate the control signal for the shutters 6B ((D) of FIG. 19). More specifically, for example, when the picture signal D1 is an image signal DA for the viewer 9A ((A) of FIG. 19), the control signal for the shutters 6A changes from low level to high level after decoding of the control code CS is finished, and changes from high level to low level after the elapse of a time based on the open/close duty ratio instructed by the control code CS ((C) of FIG. 19). The shutters 6A are opened only during a period that the control signal is at high level and the viewer 9A is allowed to view the image A during the period. Likewise, for example, when the picture signal D1 is the image signal DB for the viewer 9B ((A) of FIG. 19), the control signal for the shutters 6B changes from low level to high level after decoding of the control code CS is finished, and changes from high level to low level after the elapse of a time based on the open/close duty ratio instructed by the control code CS ((D) of FIG.19). The shutters 6B are opened only during a period that the control signal is at high level and the viewer 9B is allowed to view the image B during the period.

Although the example in the case where the open/close duty ratio is equal to or less than 50% is described above, the operation is similarly performed in the case where the open/close duty ratio is equal to or larger than 50%.

As described above, in the display system 2, based on the shutter control signal CTLS, open/close operation of the shutters 6A of the shutter eyeglasses 60A and the shutters 6B of the shutter eyeglasses 60B is allowed to be freely set.

### [Effects]

As described above, in the embodiment, since the open operation timing and the open time for each of the plural pair of the shutter eyeglasses are instructed, the multi-view system allowing the plurality of viewers to view different pictures displayed on one display device is achievable. Other effects are the same as those in the above-described first embodiment.

Hereinbefore, although the invention has been described with referring to the several embodiments, the invention is not limited thereto, and various modifications may be made.

For example, in each of the above-described embodiments, the liquid crystal display device is used for the display section. However, this is not limitative, and alternatively, for example, an EL (Electro-Luminescence) display device, a plasma display device, a projector employing DLP (Digital Light Processing), and the like may be used.

Moreover, for example, the shutter eyeglasses may support both of the stereoscopic display system (the first embodiment) and the multi-view system (the second embodiment) by switching the modes. More specifically, when the shutter eyeglasses control the shutters based on the shutter control signal CTL, for example, in a mode of the stereoscopic display system, the shutter eyeglasses may control the left-eye shutter 6L and the right-eye shutter 6R based on the control code C (FIG. 6), and in a mode of the multi-view system, the shutter eyeglasses may control the pair of shutters 6A and the pair of shutters 6B based on the control code CS (FIG. 17).

## Claims

1. A display device comprising:
a display section alternately displaying a left-eye image and a right-eye image in a time-divisional manner; and
a shutter control code generation section generating a shutter control code which allows a left-eye shutter and a right-eye shutter to switch between opened state and
closed state, in synchronization with switching between the left-eye image and the right-eye image, wherein
the shutter control code includes open operation timing information instructing a start point of open operation of the left-eye shutter or the right-eye shutter and open time information indicating an open time of the left-eye shutter or the right-eye shutter.

2. The display device according to claim 1, wherein
the open time information includes an open time information flag indicating whether the open time of the left-eye shutter or the right-eye shutter is instructed with use of an open time value indicating length of the open time, and
the open time value is arranged subsequent to the open time information flag only when the open time information flag is active logic.

3. The display device according to claim 2, wherein
the open time value is an open/close duty ratio representing a ratio of the open time of the left-eye shutter or the right-eye shutter to a frame period in which a set of the left eye image and the right eye image are displayed.

4. The display device according to claim 3, wherein
the open time value represents a relative value to a reference value of the open/close duty ratio.

5. The display device according to claim 4, wherein
the reference value of the open/close duty ratio is 50%.

6. A display device comprising:
a display section alternately displaying a first image and a second image in a time-divisional manner; and
a shutter control code generation section generating a shutter control code which allows one or more first shutters and one or more second shutters to switch between opened state and closed state, in synchronization with switching between the first image and the second image, wherein
the shutter control code includes open operation timing information instructing a start point of open operation of the first shutters or the second shutters and open time information indicating an open time of the first shutters or the second shutters.

7. A shutter device comprising:
reception means for receiving a shutter control code; and
a left-eye shutter and a right-eye shutter each switching between opened state and closed state, based on the shutter control code and in synchronization with switching between a left-eye image and a right-eye image which are alternately displayed in a time-divisional manner, wherein
the shutter control code includes open operation timing information instructing a start point of open operation of the left-eye shutter or the right-eye shutter and open time information indicating an open time of the left-eye shutter or the right-eye shutter.

8. The shutter device according to claim 7, wherein
the open time information includes an open time information flag indicating whether the open time of the left-eye shutter or the right-eye shutter is instructed with use of an open time value indicating length of the open time, and
the open time value is arranged subsequent to the open time information flag only when the open time information flag is active logic.

9. The shutter device according to claim 8, wherein
the left-eye shutter and the right-eye shutter operate based on the open time value arranged subsequent to the open time information flag when the open time information flag is active logic, and operate based on the open time value last supplied when the open time information flag is inactive logic.

10. The shutter device according to claim 8, wherein
the left-eye shutter and the right-eye shutter operate based on the open time value last supplied when the open time value is invalid.

11. The shutter device according to claim 10, wherein
the open time value is invalid when all bits thereof are inactive logic.

12. A shutter control circuit comprising:
a shutter control code generation section generating a shutter control code which allows a left-eye shutter and a right-eye shutter to switch between opened state and
closed state, in synchronization with switching between a left-eye image and a right-eye image which are alternately displayed in a time-divisional manner; and
transmission means for transmitting the shutter control code to the left-eye shutter and the right-eye shutter, wherein
the shutter control code includes open operation timing information instructing a start point of open operation of the left-eye shutter or the right-eye shutter and open time information indicating an open time of the left-eye shutter or the right-eye shutter.

13. A method of controlling shutters comprising:
in a display device,
displaying a left-eye image and a right-eye image alternately; and
generating a shutter control code which includes open operation timing information instructing a start point of open operation of a left-eye shutter or a right-eye shutter and open time information indicating an open time of the left-eye shutter or the right-eye shutter, and transmitting the shutter control code to a shutter device, in synchronization with display switching between the left-eye image and the right-eye image, and in the shutter device,
receiving the shutter control code; and
allowing each of the left-eye shutter and the right-eye shutter to start open operation, based on the received open operation timing information, and allowing each of the left-eye shutter and the right-eye shutter to perform close operation after the elapse of a time based on the received open time information.

14. A display system comprising:
a display device; and
a left-eye shutter and a right-eye shutter each perform open/close operation in synchronization with a left-eye image and a right-eye image, wherein
the display device includes
a display section alternately displaying the left-eye image and the right-eye image in a time-divisional manner, and
a shutter control code generation section generating a shutter control code which allows s the left-eye shutter and the right-eye shutter to switch between opened state and closed state, in synchronization with switching between the left-eye image and the right-eye image, and
the shutter control code includes open operation timing information instructing a start point of open operation of the left-eye shutter or the right-eye shutter and open time information indicating an open time of the left-eye shutter or the right-eye shutter.
